# EUROPEAN PATENT APPLICATION

(11) **EP 4 841 315 A1**
(43) Date of publication of application: **18.11.2026**
(21) Application number: 25175969.2
(22) Date of filing: 13.05.2025
(51) Int. Cl.: G02B 6/12, G02B 6/13, G02B 6/132, G02B 6/42, G02B 6/136

(54) **PHOTONIC DEVICE, ARRAY OF PHOTONIC DEVICES AND METHOD FOR FABRICATING A PHOTONIC DEVICE**

(71) Applicant: LiGenTec SA, 1024 Ecublens (CH)
(72) Inventor: Sacchetto, Davide, 1462 Yvonand, Vaud (CH); Goyvaerts, Jeroen, 1025 Saint-Sulpice, Vaud (CH)
(74) Representative: Isarpatent

(57) **Abstract**

The present invention provides a method for fabricating a photonic device (1), comprising providing (S1) a photonic integrated platform including a waveguide structure (11) on a substrate (12), the waveguide structure (11) having an upper surface (4a, 11a) and comprising a waveguide core (2) for guiding an optical mode, and an optical cladding (3) surrounding the waveguide core (2), the optical cladding (3) including a top cladding layer (31), bonding (S3) a plurality of first optical components (5) onto the upper surface (4a, 11a) at a first predetermined position (51) above the waveguide core (2), measuring (S4) a position of each of the bonded first optical components (5) relative to the first predetermined position (51), determining (S5) at least one falsely placed first optical component (5a) of the plurality of first optical components (5), and bonding (S6) at least one second optical component (6) onto the upper surface (4a, 11a) in proximity to the at least one falsely placed first optical component (5a) at a second predetermined position (61) above the waveguide core (2), wherein the first optical component (5) and the second optical component (6) are of an identical type. Further the present invention provides a corresponding photonic device (1) and an array (100) of photonic devices (1).

## Description

### TECHNICAL FIELD OF THE INVENTION

The invention relates to a photonic device, an array of photonic devices and a method for fabricating a corresponding photonic device.

### TECHNICAL BACKGROUND

In placing photonic components, e.g., by micro transfer-printing integration, the printing procedure typically has a 3-sigma placement accuracy of 0.5 µm across a typical reticle area (22x22 mm2). This is typically the advertised value for a single post print, with the highest capable tool. Different solution providers might have a lower specification, for example of a 3-sigma accuracy of about 1 µm or 1.5 µm. The architectures of the integrated components, such as a single print to 1D-array printing or a more complex 2D-array printing also impacts the printing accuracy.

In electronic manufacturing, when a false print of a component is occurring, a redundant component can be printed next to it including its interconnection. This is easily achievable in electronics, but it is not feasible in photonics so far without a penalty. For example, an edge-coupled laser or an evanescently-coupled modulator needs to couple to a waveguide to be integrated into the photonic device. A false print prevents you from simply printing another laser/modulator next to it. One needs to incorporate a splitting of the waveguide circuit, with a tunable switch, so that the circuit goes via a first optical path or a second optical path.

This implies either a 3 dB loss due to the splitting for the laser, or a constant electrical power dissipation to DC switch from one modulator to another modulator controlling the two lasers or modulators.

Therefore, it is an objective of the invention to provide a device and method that enables to re-print a plurality of misaligned optical components forming a plurality of photonic devices resulting in an overall yield improvement such that a percentage of functionally good photonic devices increases.

### SUMMARY OF THE INVENTION

According to the invention, this problem is solved in each case by the subject matters of the independent claims.

According to a first aspect of the invention, a method for fabricating a photonic device is provided. The method comprises providing a photonic integrated platform including a waveguide structure on a substrate, the waveguide structure having an upper surface and comprising a waveguide core for guiding an optical mode, and an optical cladding surrounding the waveguide core, the optical cladding including a top cladding layer, bonding a plurality of first optical components onto the upper surface at a first predetermined position above the waveguide core, measuring a position of each of the bonded first optical components relative to the first predetermined position, determining at least one falsely placed first optical component of the plurality of first optical components, and bonding at least one second optical component onto the upper surface in proximity to the at least one falsely placed first optical component at a second predetermined position above the waveguide core, wherein the first optical component and the second optical component are of an identical type.

According to a second aspect of the invention, a photonic device is provided. The photonic device comprises a photonic integrated platform including a waveguide structure on a substrate, the waveguide structure having an upper surface and comprising a waveguide core for guiding an optical mode, and an optical cladding, the optical cladding including at least a top cladding layer above the waveguide core, a first optical component bonded onto the upper surface at a first predetermined position above the waveguide core, wherein the first optical component is a falsely placed first optical component having a misalignment with respect to the predetermined first position, and a second optical component placed onto the upper surface at a second predetermined position above the waveguide core, wherein the first optical component and the second optical component are of an identical type.

According to a third aspect, an array of photonic devices is provided. The array of photonic devices comprises a plurality of photonic devices on a common substrate, each of the photonic devices includes a photonic integrated platform including a waveguide structure on a substrate, the waveguide structure having an upper surface comprising a waveguide core for guiding an optical mode, and an optical cladding, the optical cladding including at least a top cladding layer above the waveguide core, and a first optical component bonded onto the upper surface at a first predetermined position above the waveguide core, wherein at least one optical component of a first photonic device of the plurality of the photonic devices is a falsely placed first optical component having a misalignment with respect to the predetermined first position, wherein the first photonic device comprises a second optical component placed in proximity to the falsely placed first optical component onto the upper surface at a second predetermined position above the waveguide core, wherein the first optical component and the second optical component are of an identical type.

A fundamental idea of the present invention is to repeat a bonding step with another component of the same type. In order to increase the probability of achieving a correct alignment in a photonic device. In particular, evanescently-coupled optical components, such as detectors or DFB-lasers, bring the opportunity to build in some redundancy by having a proportionally larger sized surface so that two devices can be bonded.

Optical components that can be evanescently-coupled may include: i) photodetectors (PD), ii) distributed feedback (DFB)-lasers, iii) Fabry-Perot (FP)-Laser, iv) single-side reflective SOAs (RSOA), v) in-line/dual-port SOAs, vi) opto-magnetic on-chip isolators (OMI), vii) electro-optic modulators (EOM) and viii) electro-absorption modulators (EAM). These optical components might be of a single-port type or dual-port type depending on the way the light input-output is configured. In this disclosure, a single-port optical component is a component that has a single light input port or light output port, whereas a dual-port optical component is a component where an input side and an output side of the light are present and physically separated. For instance, a single-port device includes an emitter, such as DFB, FP-type laser diode, or a detector, such as a PD, or a single-side reflective amplifier, such as an RSOA. Examples for a dual-port device include a modulator, such as a the following types: thin-film Lithium Niobat (TFLN), Barium Titanate (BTO), III-V type, polymer, etc., or in-line/ dual-line amplifier, such as an SOA made of III-V material (SOA-III-V), or an opto-magnetic isolator (OMI). Depending on the single- or dual- port configuration, different preferred waveguide geometries might be implemented according to several embodiments of the present disclosure.

A fundamental concept of the invention is to bond a first optical component at the first predetermined position on a bonding area on a surface of the waveguide structure. The first bonding area is designed such that there is enough space for at least one more subsequent optical component at a subsequent a second predetermined position. After placing all the first optical components in parallel on the upper surface of the waveguide structure, the actual position achieved by the bonding process is measured and checked. If a first optical component is identified or classified as a falsely placed first optical component, which means that the component is misaligned with respect to the waveguide core, a second optical component of the same type is placed and bonded at the second predetermined position next to the first optical component. The measurement of the new position may be performed and a subsequent placement of a next optical component of the same type may be performed as well, as will be described further below. Depending on the type of the optical components, the bonding of the subsequent optical components can be performed at a "downstream" position, an "upstream" position or at a "bridge-out" position of the first optical component. While the bonding of the first optical component may be performed in parallel, the bonding of the second optical component may be performed sequentially one by one. The choice of printing in parallel or in sequence or in batches may depend on the printing process yield. The printing may also herein be referred to as the "bonding".

For example, whenever a PD as optical component is printed, coupled light, which may be an optical signal traveling in the waveguide that needs to be detected by the PD, should enter the bonding area of the upper surface and traverses towards the next far-end bonded site (of the current, e.g. first, predetermined position) of the primary PD to achieve an acceptable functionality. The currently integrated PD is inspected by a tool to verify whether the print was performed accurately. If the placement is out of predefined specifications, which means that the light, such as the optical signal, will not couple efficiently from the waveguide core into the current PD, a next back-up PD is bonded ahead on a next bonding site (next, e.g. second, predetermined position), i.e. upstream, of the current PD on the first bonding site or area with respect to the waveguide local entry point.

This method ensures that each subsequent print of PDs will ultimately produce a well-functioning (in other words "good") PD-photonic device with functionality not affected by the previous PD- printing sequence. This method of printing-checking-reprinting of PD-optical components can be iterated indefinitely or, at least, up to a point where the bonding area designed for the final PD-photonic device allows in terms of design space.

In another example, the photonic components may be emitters having an active region, such as DFB lasers or FP lasers, from which an optical mode can propagate into the waveguide core, e.g., by evanescent wave coupling, in which case the next predetermined position in the occurrence of a "bad" or false print needs to be at a "downstream" position with respect to the previous print.

In yet another example, the optical components may be dual-port components such as modulators capable of modulating the phase of an optical mode propagating through the waveguide core, in which case both the input and output signals to and from the modulators needs to be undisturbed from subsequent corrective prints. In such cases, a, preferably periodic, meandered waveguide geometry allows to "bridge-out" a traveling optical signal at positions where modulators are printed, as will be described further below. Similarly, other dual-port optical components, such as amplifiers and isolators may require a meandered waveguide geometry.

As for the material of the waveguide structure, common optical materials for a cladding and a core may be employed. For example, the cladding may be composed e.g. of silicon dioxide, SiO₂. The waveguide core, which may represent a waveguide core layer, may be composed of silicon nitride, Si₃N₄ for a high refractive index contrast, e.g., at a wavelength of 1550 nm. The waveguide core may be composed of one or more sublayers that may differ in thickness and dimension, in particular suitable for phase matching and mode shaping to minimize reflections and increase the coupling efficiency. One of the sublayers may even be an intermediate cladding layer separating one or more other waveguide sub-layers or different sections. The waveguide core may be buried underneath the top cladding layer. The waveguide core might be designed with a suitable geometry, straight or bent in order to allow subsequent bonding or print depending on specific optical component configurations. The substrate may be composed of Silicon, SI. Other material compositions are also applicable to the present invention.

As for the array of photonic device, a plurality of first optical components are bonded onto the upper surface of the waveguide structure or on a plurality of bottom surfaces of respective cavities in parallel, meaning that all instances of optical components in such an array are printed in a single bonding step. This means that the corresponding method step might be carried out in parallel or in a sequential manner or a combination thereof, depending on the available tool configuration for bonding, which includes printing.

The array is formed by printing or bonding all the first optical components, an inspection or measuring step is carried out to verify which of the bonded first optical components are misplaced or misaligned, leading to a compromised functionality of the local photonic device in the array. The position of each misaligned/ misplaced optical component may be stored in a computer memory to be used during the subsequent corrective printing/ bonding step of the second optical component.

The corrective printing/ bonding step is then executed to correct individual photonic devices. Therefore, once the inspection step measures all of the misalignment values for all the first optical components in the array, the location of falsely photonic devices is stored in a computer memory. Then, a single or individual printing/ bonding step of second optical components is carried out at those locations according to the disclosure.

A particular advantage in the solution according to an aspect of the invention is that the integration yield can be boosted considerably. For example, assuming the original case with only one bonding step has a yield γ1 of placing the first optical component correctly is: γ1 = γ0 (i.e. γ0 = 98%). For the proposed case with original bonding, yield γ1 as assessed during yield inspection, a potential follow-up print or bonding will yield: γ2 = γ0 + (1-γ0)*γ0 = 99.96%

Moreover, this invention could be adapted to allow for a cascaded approach of more than two elements, if deemed useful, to further boost an overall system integration yield, which would be crucial for more complicated computing meshes, or for wafer-level spanning circuits using reticle stitching.

According to some embodiments of the method, bonding of the first optical component and bonding of the second optical component is conducted via micro transfer printing, or, wherein bonding is carried out via glue-bonding or low-temperature bonding method. Micro transfer printing is a particularly effective way to place optical or photonic components onto a suitable photonic platform. Glue-bonding and low-temperature bonding also provide a bonding method that does not damage the optical components and provides a strong and reliable bond. For instance, when the second optical component is a photodiode or a III-V laser, micro-transfer printing is a preferred method. Alternatively, a low-temperature die-to-wafer bonding between SiO2 thin-films or a glue-bonding using an intermediate adhesive layer can be used instead of micro-transfer printing as a bonding method.

According to some embodiments of the method, measuring the position of each of the bonded first optical components includes capturing an optical image of each of the plurality of first optical components. The optical image may be captured by a microscope for optical inspection. It may also involve manual or automatic software, the latter may also include artificial intelligence, which has been trained by previous measurements using the same equipment for bonding the optical components.

According to some embodiments of the method, the method further comprises forming alignment markers on two layers of the photonic device, wherein a first layer of the two layers is part of the the first or second optical component and wherein a second layer of the two layers is a layer formed prior to the bonding of the first optical component. The second layer may thus be e.g. the substrate, the upper surface of the waveguide structure, the bottom surface of the cavity. The spatial misalignment may thus be measured by measuring the distance between alignment markers formed on the optical components (first layer) and on the second layer. For instance, reference alignment markers may be formed in the same layer of the waveguides on the photonic integrated structure, while a second set of alignment markers may be formed in one of the materials constituting a photodiode. Measuring the distance between the reference markers and the second set of alignment markers provides a quantitative assessment of spatial misalignment. This represents a particular effective way to determine falsely placed optical components.

According to some embodiments of the method, the method further comprises opening a plurality of cavities by removing at least partly the top cladding layer locally, wherein the cavity includes an exposed bottom surface, wherein bonding the first optical components includes bonding a first optical component onto the exposed bottom surface of each of the cavities at the first predetermined position above the waveguide core, wherein bonding of the at least one second optical component comprises bonding the at least one second optical component onto the bottom surface of the cavity, in which the at least one falsely placed first optical component is bonded.

The cavity is opened only locally, i.e., in a restricted area of the top surface of the photonic integrated platform, by removing at least a part of the top cladding layer. Preferably, the top cladding layer is removed down to a depth where substantial mode coupling into the waveguide core becomes possible. This means that the complete top cladding layer may be removed to expose the waveguide core, or about a micrometer-thick layer of cladding may be left, which still enables evanescent wave coupling from the first and second optical component into the waveguide core. It is understood that in the case of a top cladding thinner than a micrometer, the evanescent-coupling can be sufficient so that it does not require to partially remove a part of the top cladding layer locally. In this case, the cavity opening step might be omitted. By opening the cavity, one can gain access to waveguide cores buried further below a cladding layer. The bottom surface of the cavity then becomes a part of the upper surface of the waveguide structure.

According to some embodiments of the method, opening of the plurality of cavities includes etching the plurality of cavities to a depth such that an optical mode emitted by the optical component optically couples to the waveguide core by evanescent wave coupling. The optical component thus interacts with the waveguide core in that an optical mode can propagate between these two. For example, in case of a laser, the emitted optical mode can be launched into the waveguide core by evanescent wave coupling through an additional cladding layer, e.g., the non-etched top cladding layer or a surrounding cladding layer.

According to some embodiments of the method, the method further comprises forming a bonding layer onto the upper surface before bonding the first optical component, wherein the first optical component and the second optical component are blue-bonded on the bonding layer. Preferably, the bonding layer includes an adhesive, such as, for instance, diluted BenzoCycloButene (BCB). The adhesive might be provided by either spray coating, spin coating or any other suitable deposition methods. This provides a strong bond and the necessary thickness uniformity between the first or second optical component and the waveguide structure, e.g., the top cladding layer, the surrounding cladding layer and the waveguide core.

According to some embodiments of the method, the method further comprises determining at least one falsely placed second optical component of the at least one second optical components, and bonding at least one third optical component onto the upper surface in proximity to the at least one falsely placed second optical component at a third predetermined position above the waveguide core, wherein the first, second, and third optical components are of an identical type. This represents the expanded case with original print, inspection, first follow-up print, inspection, second follow-up print such that a higher probability of placement can be reached. Assuming a probability of correct placement of 98% as indicated above, with this embodiment, it will be possible to achieve a probability of γ3 = 99.9992%. This is particularly beneficial for large arrays of photonic devices.

According to some embodiments of the method, determining at least one falsely placed first optical component comprises determining an alignment angle between an orientation of the first optical component and the waveguide core at the first predetermined position, classifying each of the first optical components to be a falsely placed first optical component, for which a corresponding alignment angle of the first optical component is above a predetermined threshold angle. The threshold angle can be set to an angle where inefficient mode coupling, e.g., less than 90%, 75% or 50%, is to be expected. Besides a misalignment angle, a displacement in a lateral direction perpendicular to an intended propagation of the optical mode in the waveguide core and in parallel to the bottom surface of the cavity can be used to determine the falsely placed first optical component. In this way, the falsely placed first optical component can be determined accurately. Alternatively or in addition, the falsely placed first optical component may be misaligned to the first predetermined position by a lateral shift that leads to reducing coupling between the waveguide core and the first optical component.

According to some embodiments of the method, the method further comprises separating the photonic integrated platform to provide a plurality of separate photonic devices, each having one of the cavities of the plurality of cavities comprising at least one first optical component. In other embodiments, the photonic device may be fabricated in parallel on separate substrates so that this separation step is not required. In some applications, the separation of parallel fabricated photonic (sub-)devices may be required, in particular when a large number of identical photonic devices are fabricated on the same wafer or substrate. Such a separation can be performed with commonly known techniques.

According to some embodiments of the photonic device, a cavity may be formed at least in the top cladding layer locally and first or second optical components are bonded onto a bottom surface of the cavity at respective first and second predetermined positions above the waveguide core. As mentioned above, by opening the cavity, one can gain access to waveguide cores buried further below a cladding layer. The bottom surface of the cavity may be e.g. a top surface of the waveguide core, the top surface of an intermediate cladding layer, or a top surface of a bonding layer 7 placed into the cavity.

According to some embodiments of the photonic device, the first and second optical components are light emitters, wherein the second predetermined position is located at a position downstream the first predetermined position in an intended propagation direction of the optical mode in the waveguide core. In this way, light emitters such as laser diodes etc. can be integrated into the photonic device and can benefit from the present solution for increasing the yield and accuracy of the placement of the optical component.

According to some embodiments of the photonic device, the first and second optical components are photodetectors having a detector surface, wherein the second predetermined position is located at a position upstream the first predetermined position, wherein an optical mode propagating through the waveguide core moves towards the detector surface. Preferably, the photodetector is evanescently coupled to a termination of the waveguide core. In this way, detectors such as photodiodes etc. can be integrated into the photonic device and can benefit from the present solution for increasing the yield and accuracy of the placement of the optical component.

According to some embodiments of the photonic device, the first and second optical components are dual-port optical components, wherein the dual-port optical components include a reverse portion comprising a U-shaped waveguide portion in which an intended propagation direction of the optical mode in the waveguide core is reversed. In further embodiments of the photonic device, the first and second optical components are amplifiers or electro-optic/electro-absorption modulators, wherein the optical component includes a reverse portion comprising the U-shaped waveguide portion in which an intended propagation direction of the optical mode in the waveguide core is reversed. In this case, these dual-port optical components may present a single-side for both input and output optical signals, in which case a straight waveguide configuration may be suitable.

According to some embodiments, the first and second optical components are non-folded dual-port optical components. The waveguide core of the waveguide structure has a meandered waveguide geometry. This meandered geometry of the waveguide core allows for the correction of a misplaced folded type dual-port optical components by placing an additional optical component in front of the firstly placed optical component, thereby guiding an optical mode from the waveguide core only through the later placed additional optical component and back through the wavegide layer. These embodiments thus increase the versability of the present invention to further types of optical devices, namely non-folded dual-port optical components such as modulators capable of modulating the phase of an optical mode, some types of amplifiers and optical isolators.

According to some embodiments of the photonic device, the waveguide structure further comprises a bridge layer arranged between the waveguide core and the upper surface, wherein a refractive index of the bridge layer allows to efficiently couple light between the bonded optical component and the waveguide core. In preferred embodiments, the refractive index of the bridge layer is greater than or equal to a refractive index of the waveguide core. The bridge layer thus supports evanescent and adiabatic wave coupling between the waveguide core and the optical components. In addition, the optical cladding of the photonic device may comprise a lower cladding layer formed on the substrate, wherein the waveguide core is formed on the lower cladding layer, wherein the optical cladding further comprises a surrounding cladding layer, which is formed between the lower cladding layer and the top cladding layer. This represents a suitable and easy way to manufacture the cladding for the waveguide structure of the photonic device.

According to some embodiments of the photonic device, electric contacts are provided to electrically connect the first optical components and the at least one second optical component to a power source. In preferred embodiments, the contacts are configured as metal routing lines. These allow for a connection to the respective optical component integrated on the respective integration site on the upper surface or in the cavity without the contacts or metal routing lines crossing the waveguide core. In this way, the optical signal can continue towards the first or the second optical component. The design of the contacts is such that the traces for the potentially printed subsequent components do not lead to any optical signal loss in the path towards the main device. This is particularly valuable for low-speed devices, like monitor diodes, or stable laser inputs that do not need to be driven >> 1 GHz.

The above embodiments and further developments can be combined with each other as desired, if appropriate. In particular, all features of the photonic device or the array of photonic devices are transferable to the method for fabricating the photonic device or the method of fabricating an array of photonic devices, and vice versa. Other possible aspects, further developments and implementations of the invention also include combinations of features of the invention described above or below with regard to the embodiment examples that are not explicitly mentioned. In particular, the skilled person will also add individual aspects as improvements or additions to the respective basic form of the present invention.

Advantageous embodiments and further developments emerge from the description with reference to the figures.

### BRIEF SUMMARY OF THE DRAWINGS

The present invention is explained more specifically below on the basis of the exemplary embodiments indicated in the schematic figures, in which:
- Fig. 1: shows a flow chart for a method for fabricating a photonic device according to an embodiment of the invention;
- Fig. 2a: shows a top view in an x-z-plane of a photonic device according to an embodiment of the invention;
- Fig. 2b: shows a cross-section in an x-y-plane of a photonic device according to a further embodiment of the invention;
- Fig. 3a: shows a top view in an x-z-plane of an intermediate fabrication state of a photonic device according to a further embodiment of the invention;
- Fig. 3b: shows a cross-section in an x-y-plane of an intermediate fabrication state of a photonic device according to a further embodiment of the invention;
- Fig. 4a: shows a top view in an x-z-plane of a photonic device according to a further embodiment of the invention;
- Fig. 4b: shows a cross-section in an x-y-plane of a photonic device according to a further embodiment of the invention;
- Fig. 5a: shows a top view in an x-z-plane of a photonic device according to a further embodiment of the invention;
- Fig. 5b: shows a cross-section in an x-y-plane of a photonic device according to a further embodiment of the invention;
- Fig. 6: shows a top view in an x-z-plane of a photonic device according to a further embodiment of the invention;
- Fig. 7: shows a top view in an x-z-plane of a photonic device according to a further embodiment of the invention;
- Fig. 8: shows a top view in an x-z-plane of a photonic device according to a further embodiment of the invention;
- Fig. 9: shows a top view in an x-z-plane of a photonic device according to a further embodiment of the invention.
- Fig. 10: shows a top view in an x-z-plane of another dual-port optical component to be integrated into a photonic device according to a further embodiment of the invention;
- Fig. 11: shows a top view in an x-z-plane of a further optical component to be integrated into a photonic device according to a further embodiment of the invention;
- Fig. 12a-d: show top views in an x-z-plane of a photonic device in four different steps of fabrication according to a further embodiment of the invention; and
- Fig. 13a: shows a waveguide core having meandered waveguide geometry included in the photonic device according to an embodiment of the invention;
- Fig. 13b: shows a non-folded dual-port first optical component bonded above the waveguide core of Fig. 2a at a first predetermined position;
- Fig. 13c: shows a non-folded dual-port second optical component bonded on the waveguide core of Fig. 2b at a second predetermined position;
- Fig. 14: shows a top view in an x-z-plane of an array of photonic device according to an embodiment of the invention.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

### DESCRIPTION OF EMBODIMENTS

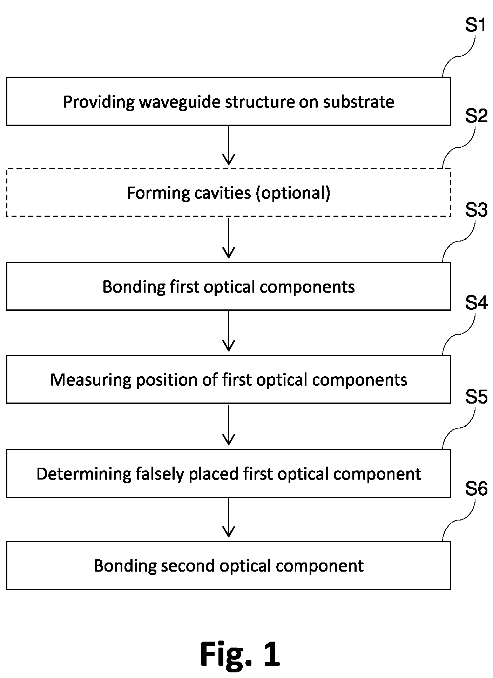

Fig. 1 shows a flow chart for a method for fabricating a photonic device 1 according to an embodiment of the invention.

Providing a specific example for printing photodiodes according to the method for fabricating a photonic device 1, a photonic integrated platform including a waveguide structure 11 on a substrate 12 is provided in step S1. The waveguide structure 11 has an upper surface 11a. The waveguide structure 11 comprises a waveguide core 2 for guiding an optical mode, and an optical cladding 3 surrounding the waveguide core 2, the optical cladding 3 including a top cladding layer 31. The cladding 3 may be composed e.g. of silicon dioxide, SiO₂. The waveguide core 2, which may represent a waveguide core layer, may be composed of silicon nitride, Si₃N₄ for a high refractive index contrast, e.g., at a wavelength of 1550 nm.

The waveguide core 2 may be composed of one or more sublayers that may differ in thickness and dimension, in particular suitable for mode shaping and phase matching to minimize reflections and maximize the coupling efficiency between the waveguide core 2 and a printed optical component 5, 6. One of the sublayers of the waveguide core 2 may even be an intermediate cladding layer separating one or more other waveguide sub-layers or different sections of the waveguide cores 2, which may be required for dual port components such as amplifiers or modulators, as it will be discussed further below.

In some embodiments, the optical cladding 3 comprises a lower cladding layer 32 formed on the substrate 12. The waveguide core 2 is formed on the lower cladding layer 32. In some of these embodiments, the optical cladding 3 further comprises a surrounding cladding layer 33, which is formed between the lower cladding layer 32 and the top cladding layer 31. The waveguide core 2 may be buried underneath the top cladding layer 31. The substrate 12 may be composed of Silicon, Si. Other material compositions are also applicable to the present invention.

In an optional step of the method, a plurality of cavities 4 are opened in step S2 by removing at least partly the top cladding layer 31 locally. In some embodiments, opening of the plurality of cavities 4 includes etching the plurality of cavities 4 to a depth 4b such that an optical mode emitted by the optical component optically couples to the waveguide core 2 by evanescent-wave coupling. This means that the top cladding layer 31 may be removed partly down to a predetermined depth 4b or completely, e.g., down to the waveguide core 2.

In a further method step S3, a first optical component 5 is printed or bonded at step S3 onto the upper surface 11a of the waveguide structure 11 or, in case a cavity 4 has been opened, onto an exposed bottom surface 4a of each of the cavities 4 at a first predetermined position 51 above the waveguide core 2. In some embodiments, the bonding of the first optical component 5 and the bonding of the second optical component 6 is conducted via micro transfer printing.

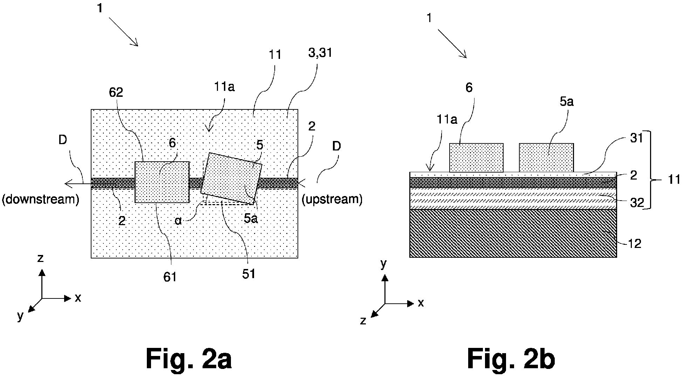

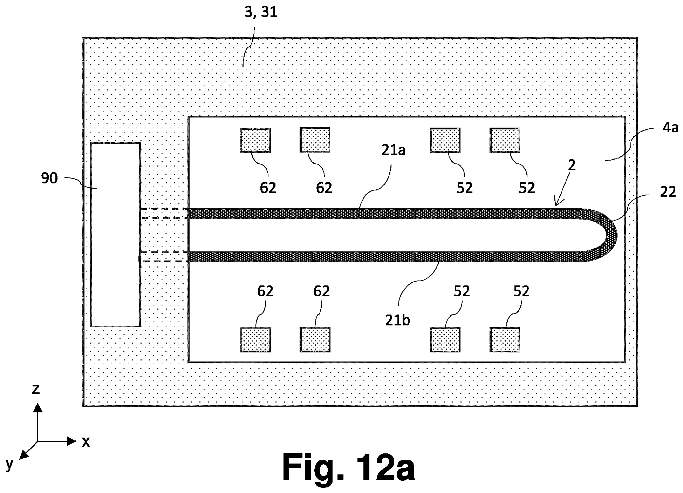

In further embodiments, in which a plurality of single-port optical components, such as photodetectors, PD, distributed feedback, DFB, or Fabry-Perot, FP, lasers or single-side reflective semiconductor optical amplifiers, RSOA, are being printed, the geometry of the waveguide core 2 can be straight or curved. For the case of single-port optical components, the preferred underlying waveguide geometry for the waveguide core 2 is straight as depicted in Fig. 2a, 3a, 4a, 5a, 6, 7, 8, 9. This also applies to folded dual-port optical components, in which the optical component is capable of stirring the direction of the optical signal as depicted in Fig. 12a to 12d.

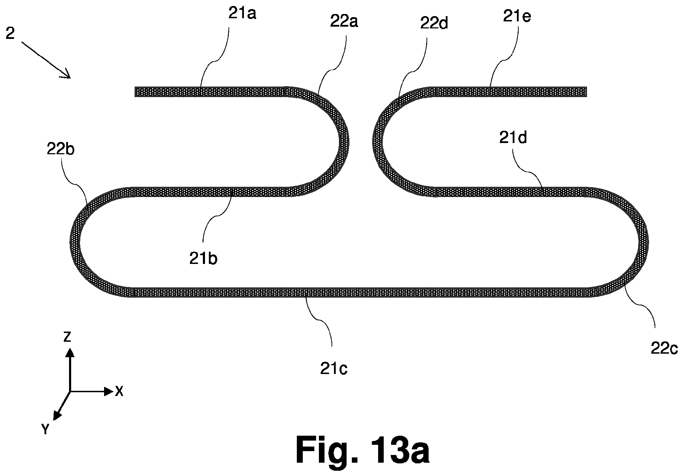

In further embodiments, in which a plurality of non-folded dual-port optical components 5, 6, such as electro-optic modulators - EOM, electro-absorption modulators - EAM, in-line semiconductor optical amplifiers-SOA, opto-magnetic isolators-OMI, are being printed, the geometry of the waveguide core 2 can be straight, curved or preferably following a meandered shape or waveguide geometry,such as depicted in Fig. 13a to 13c.

In further embodiments, specific waveguide and routing geometries of the waveguide core 2 might be designed to allow for n-th port components, where the number of ports is greater than two. Non-exhaustive examples of printable n-th port components are, and not limited to: optical circulators, wavelength division multiplexers/demultiplexers (WDMs), optical couplers, IQ mach-zehnder modulators. In this case, suitable waveguide geometries might be following a combination of straight and meandered patterns.

In a further method step, a position of each of the bonded first optical components 5 relative to the first predetermined position 51 on the upper surface 11a or the bottom surface 4a of the respective cavity 4 is measured at step S4. In some embodiments, measuring the position of each of the bonded first optical components 5 includes capturing an optical image of each of the plurality of first optical components bonded in the respective cavities 4. The optical image may be captured by a microscope for optical inspection. It may also involve manual or automatic software, the latter may also include artificial intelligence, which has been trained by previous measurements using the same equipment for bonding the optical components.

In a further method step S5, at least one falsely placed first optical component 5a of the plurality of first optical components 5 is determined at step S5. In preferred embodiments, alignment markers 52, 62 are on two layers of the photonic device 1, wherein a first layer is part of the the first or second optical component 5, 6 and a second layer is a layer formed prior to the bonding of the first optical component 5. The second layer may thus be e.g. the substrate 12, the upper surface 11a of the waveguide structure 11, the bottom surface 4a of the cavity 4. The alignment markers 52, 62 may form a coordinate system that can be compared with the position of the first optical components 5. In that way, the determination of the falsely placed first optical component 5a is facilitated significantly.

The alignment markers 52, 62 may be formed out of the waveguide core 2, or in a combination of the waveguide core 2 and subsequent cladding layers 31, 32 or a bridge layer arranged between the waveguide core 2 and the upper surface 11a for contrast improvement. The alignment markers 52, 62 may thus be made out of the layer of the waveguide core 2, but at a different spatial location than the waveguide. Alternatively, the alignment markers 52, 62 may be made out of any pattern in a convenient layer outside the upper surface 11a or the bottom surface 4a of the cavity 4.

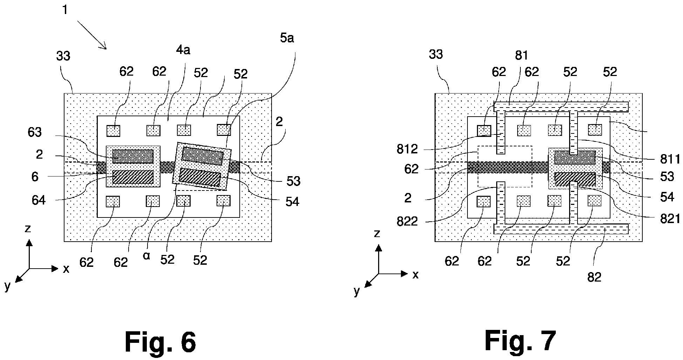

In some embodiments, the alignment markers 52, 62 are formed in a layer outside the cavity 4 to facilitate optical measurements of their relative positions with a second set of alignment markers 52, 62 formed in metal layers present on the first optical components 5 and the second optical component 6, such as the anodes 53, 63 and cathodes 54, 64 as will be explained further below with reference to Fig. 6 to 9. For instance, the markers 52, 62 are in a layer that is at the same height, which is the Y-coordinate, as markers in these metal layers present on optical components 5 and 6. In such configuration, the two sets of optical alignment markers 52, 62 will be located at a similar optical depth of focus, thereby facilitating the accurate measurement of optical misalignment.

In some embodiments, determining at least one falsely placed first optical component 5a comprises determining an alignment angle between an orientation of the first optical component and the waveguide core 2 at the first predetermined position 51, and classifying each of the first optical components 5 to be a falsely placed first optical component 5a, for which a corresponding alignment angle of the first optical component 5 is above a predetermined threshold angle α. In further embodiments, alternatively or in addition to the misalignment angle, a displacement in a lateral direction perpendicular to an intended propagation direction of the optical mode in the waveguide core 2 and in parallel to the bottom surface of the cavity 4 can be used to determine the falsely placed first optical component.

In a further method step, at least one second optical component 6 is bonded at step S6 onto the upper surface 11a, or, in case of an existing cavity 4, on the bottom surface 4a of the cavity 4, in which the at least one falsely placed first optical component 5a is bonded, at a second predetermined position 61 above the waveguide core 2. The first optical component 5 and the second optical component 6 are of an identical type and thus bonded in proximity or adjacent to each other.

In some embodiments, a bonding layer 7 is formed onto the exposed bottom surface 4a of each of the cavities 4 before bonding the first optical component 5 The first optical component 5 and the second optical component 6 are bonded on the bonding layer 7. The bonding layer is substantially transparent to the optical mode and thin enough to not substantially prevent evanescent mode coupling. In preferred embodiments, the bonding layer 7 includes an adhesive. Preferably, the bonding layer includes at least one of an adhesive, such as, for instance, diluted BenzoCycloButene (BCB). The adhesive might be provided by either spray coating, spin coating or other suitable methods. The bonding layer 7 is configured to provide a strong bond between the first or second optical components 5, 6 and the waveguide structure 11, e.g., the top cladding layer 31, the surrounding cladding layer 33 and the waveguide core 2.

In some embodiments, the first optical component 5 and the second optical component 6 are light emitters, wherein the second predetermined position 61 is located at a position downstream the first predetermined position 51 in an intended propagation direction D of the optical mode in the waveguide core 2. Contrary, in other embodiments, the first and second optical components 5, 6 are light detectors, such as photodiodes. In these embodiments, the second optical component 6 is placed upstream an intended propagation direction D of the optical mode in the waveguide core 2. In both ways, the misplaced or falsely placed optical component 5a does not interact or interfere with the optical signal.

In yet another embodiment, when the first and second optical components are dual-port components, the second optical component 6 is placed at a "bridge-out" position over a meandered waveguide, e.g. such as shown in Fig. 13a, such that the light is coupled in and out of the meandered waveguide before it encounters any of the previously "misplaced" components, as it will be described in more detail further below. In this way, the misplaced optical component 5a does not interact or interfere with the optical signal.

In an additional step, which is generally optional for the present invention, the photonic integrated platform is separated to provide a plurality of separate photonic devices 1, each having one of the cavities 4 of the plurality of cavities 4 comprising at least one first optical component 5.

In a further optional method step, alignment markers 52, 62 are formed on the bottom surface 4a of each cavity 4 for indicating the first and second predetermined positions 61.

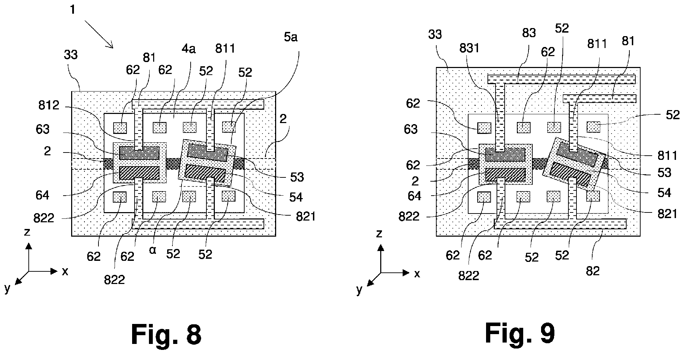

In further embodiment, as the printed optical components 5, 6 require electrical metal routing, specific routing designs or schemes can be applied to all different types of optical components. For instance, a double straight rail sharing common electrodes 81, 82 (see Fig. 7, 8) between the first and subsequent printed optical components might be suitably designed with tolerances such that any misprinted or misplaced optical component 5a is also electrically disconnected from the electrical routing.

Alternatively, now referring to Fig. 9, each position of subsequently printed optical components might be electrically addressed independently by routing individual electrical metal lines 81, 83 (see Fig. 9). A person skilled in this art will clearly understand that combinations of single (common electrode) metal routing lines and individual (separate electrical addresses) metal routing lines might be combined in a suitable manner depending on the optical component 5, 6 being printed.

Returning to the method shown in Fig. 1, a further optional method step includes disposing electric contacts 81, 82, 83 on the upper surface 11a or in each cavity 4 for electrically connecting the first optical components 5 and the at least one second optical component 6 to a power source.

In a further optional method step, at least one falsely placed second optical component 6 of the at least one second optical component 6 is determined. In this case, at least one third optical component is bonded onto the upper surface 11a or onto the bottom surface 4a of the cavity 4 of the at least one falsely placed second optical component 6 at a third predetermined position above the waveguide core 2, wherein the first, second, and third optical components are of an identical type. Similarly, in embodiments where the first, second and third optical components 5, 6 are light emitters, the third predetermined position is located at a position downstream the first and second predetermined positions 51, 62 in an intended propagation direction D of the optical mode in the waveguide core 2. Contrary, in other embodiments where the first, second and third optical components 5, 6 are detectors, the third predetermined position is located at a position upstream the first and second predetermined positions 51, 62 in an intended propagation direction D of the optical mode in the waveguide core 2. The third optical component is thus placed upstream the first and second optical components 5, 6 in an intended propagation direction D of the optical mode in the waveguide core 2. In both ways, the falsely placed first optical component 5a and the falsely placed second optical component do not interact or interfere with the incoming or outgoing optical mode.

Fig. 2a shows a top view in an x-z-plane of a photonic device 1 according to an embodiment of the invention. Fig. 2b shows a cross-section in an x-y-plane of a photonic device 1 according to a further embodiment of the invention;
The photonic device 1 comprises a photonic integrated platform including a waveguide structure 11 on a substrate 12. The waveguide structure 11 has an upper surface 11a. The waveguide structure further comprises a waveguide core 2 for guiding an optical mode, and an optical cladding 3. The optical cladding 3 includes a top cladding layer 31 arranged above the waveguide core 2. The waveguide structure 11 shown in Fig. 2 further comprises a lower cladding layer 32 arranged between the substrate 12 and the waveguide core 2.

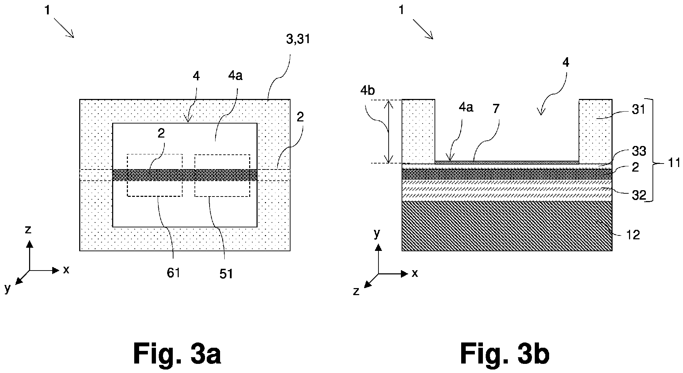

In the photonic device 1 shown in Fig. 2a and 3b, a first optical component 5 is bonded onto the upper surface 11a at a first predetermined position 51 above the waveguide core 2. It is shown that the first optical component 5 is a falsely placed first optical component 5a having a misalignment with respect to the predetermined first position 51. In this embodiment, the first optical component 5 is misaligned by an angle α with respect to the first predetermined position 51.

Therefore, a second optical component is placed or bonded onto the upper surface 11a at a second predetermined position 61 above the waveguide core 2. The first optical component 5 and the second optical component 6 are of an identical type. In this embodiment, 12, the first and second optical components 5, 6 are light emitters. The second predetermined position 61 is thus located at a position downstream the first predetermined position 51 in an intended propagation direction D of the optical mode in the waveguide core 2.

Fig. 3a shows a top view in an x-z-plane of an intermediate fabrication state of a photonic device 1 according to an embodiment of the invention. Fig. 3b shows a cross-section in an x-y-plane of an intermediate fabrication state of a photonic device 1 according to a further embodiment of the invention.

More precisely, Fig. 3b shows a photonic integrated platform, which includes a waveguide structure 11 on a substrate 12. The waveguide structure 11 comprises a waveguide core 2 for guiding an optical mode, and an optical cladding 3. The optical cladding 3 includes at least a top cladding layer 31 above the waveguide core 2. In the present embodiment, the optical cladding 3 further comprises a lower cladding layer 32 formed on the substrate 12. The waveguide core 2 is formed on the lower cladding layer 32. The optical cladding 3 further comprises a surrounding cladding layer 33, which is formed between the lower cladding layer 32 and the top cladding layer 31. In some embodiments, the waveguide core 2, which may represent a waveguide core layer in the waveguide structure 11, is made of Silicon Nitride, Si₃N4, and the cladding 3 including all the cladding layers 31, 32, 33 are made of Silicon Oxide, SiO₂. Material of the waveguide core 2 has a higher refractive index than the cladding layers 31, 32, 33 over a targeted wavelength range, which is, in preferred embodiments, 1550 nm.

The photonic device 1 further comprises a cavity 4 is formed at least in the top cladding layer 31 locally. As described above, in some embodiments, the cavity 4 is etched to a depth 4b such that an optical mode emitted by a first optical component 6 placed on a bottom surface 4a of the cavity 4 optically couples to the waveguide core 2 by evanescent wave coupling. In the embodiment of Fig. 2a, the cavity 4 is etched down to the waveguide core 2, which is exposed on the bottom surface 4a of the cavity 4. Further indicated in Fig. 2a are a first predetermined position 51 and a second predetermined position 61 for bonding a first optical component 5 and a second optical component 6, as will be described further below. In some embodiments, alignment marker 52, 62 may be bonded for indicating the respective predetermined positions 51, 62.

In the embodiment shown in Fig. 3b, a bonding layer 7 is formed onto the exposed bottom surface 4a of the cavity 4. In preferred embodiments, the bonding layer 7 includes at least an adhesive, such as diluted BenzoCycloButene (BCB). The adhesive might be provided by either spray coating, spin coating or other suitable deposition methods.

For example, in case of a laser, the emitted optical mode can be launched into the waveguide core 2 by evanescent wave coupling through an additional cladding layer, e.g., the surrounding cladding layer 33 and the bonding layer 7, as shown in Fig. 2b.

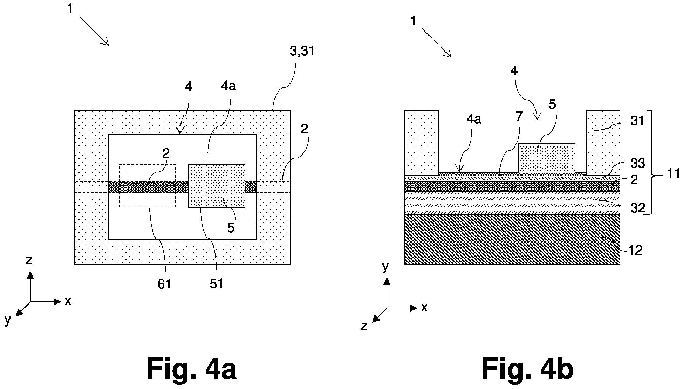

Fig. 4a shows a top view in an x-z-plane of an intermediate fabrication state of a photonic device 1 according to a further embodiment of the invention. Fig. 4 shows a cross-section in an x-y-plane of an intermediate fabrication state of a photonic device 1 according to a further embodiment of the invention. The embodiment of the photonic device 1 shown in Fig. 4a is based on the embodiment of Fig. 4a and the embodiment of the photonic device 1 shown in Fig. 4b is based on the embodiment of Fig. 3b.

In the embodiments shown in Fig. 4a and 4b, a first optical component 5 is bonded onto the bottom surface 4a of the cavity 4 at a first predetermined position 51 above the waveguide core 2. In this embodiment, the bonding layer 7 is substantially transparent to the optical mode so that it can evanescently couple out from the first optical component 5 into the waveguide core 2.

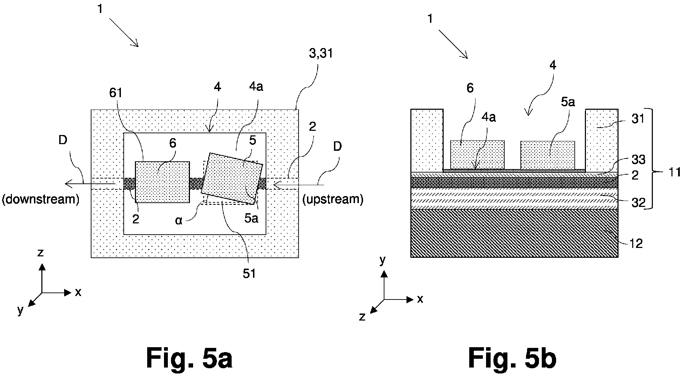

Fig. 5a shows a top view in an x-z-plane of a photonic device 1 according to a further embodiment of the invention. Fig. 5b shows a cross-section in an x-y-plane of a photonic device according to a further embodiment of the invention. The embodiment of the photonic device 1 shown in Fig. 5a is based on the embodiment of Fig. 3a and 4a, and the embodiment of the photonic device 1 shown in Fig. 5b is based on the embodiment of Fig. 3b and 4b.

It is shown that the first optical component 5 is a falsely placed first optical component 5a having a misalignment with respect to the predetermined first position 51. The falsely placed first optical component 5a is misaligned to the waveguide core 2 by an alignment angle α above a predetermined threshold value. The threshold angle can be set to an angle where inefficient mode coupling, e.g., less than 90%, 75% or 50%, is to be expected. Such angles can be in the order of a few degrees.

It is further shown that a second optical component 6 placed onto the bottom surface 4a of the cavity 4 at a second predetermined position 61 above the waveguide core 2.

In the present invention, the first optical component 5 and the second optical component 6 are of an identical type. In the present embodiment, the first and second optical components 5, 6 are light emitters. In this case, the second predetermined position 61 is located at a position downstream the first predetermined position 51 in an intended propagation direction D of the optical mode in the waveguide core 2. In other embodiments, the first optical component 5 and the second optical component 6 are light detectors, such as photodiodes. In this case, the second predetermined position 61 is located at a position upstream the first predetermined position 51 in the intended propagation direction D of the optical mode in the waveguide core 2. The first and second optical components 5, 6 may also be modulators or single-sided amplifiers.

As explained before, in yet another embodiment, the first 5 and second optical component 6 may be dual-port in-line components. In such a case, the well printed component is such that the input signal from the waveguide core 2 couples into the input section of the optical component 5, 6 and the output signal couples from the optical component output into the waveguide core 2. This "bridge-out" configuration is achieved by a meandered waveguide geometry, which allows to interrupt or bridge the traveling optical signals between different sections of the waveguide core 2. A typical waveguide geometry is a meandered waveguide, in which optical signals may be bridged at different positions along the waveguide core 2 as will be described further below with reference to Fig. 13a-13c.

This concept can be expanded to place a further optical component after a misalignment of the second optical component 6 has been determined, as described above. This results in a further reduction of the likelihood of wrongly placed optical components for the case, a plurality of similar photonic devices 1 are manufactured or fabricated in parallel.

Fig. 6 shows a top view in an x-z-plane of a photonic device 1 according to a further embodiment of the invention. The embodiment of the photonic device 1 shown in Fig. 5 is based on the embodiments shown in Fig. 2a to 5a, and is similar to Fig. 4a to 5b.

In this embodiment of the photonic device 1, alignment markers 52, 62 on the bottom surface 4a of each cavity 4 for indicating the first and second predetermined positions 61. In the present embodiment, four first alignment markers 52 are formed in a lateral direction to the waveguide core 2 next to the first predetermined position 51, indicating a front and rear end of the first optical component 5 along the waveguide core 2. Similarly, four second alignment markers 62 are formed in a lateral direction to the waveguide core 2 next to the second predetermined position 61, indicating a front and rear end of the second optical component 6 along the waveguide core 2.

In further embodiments, the alignment markers 52, 62 are formed or formed outside the cavity 4 on a top surface of the top cladding layer 31. It can be seen that the first optical component 5 is a falsely placed first optical component 5a, having a misalignment angle α with respect to the predetermined position 51.

In addition, a respective anode 53, 63, and a cathode 54, 64 of the first and second optical components 5, 6. These are to be connected to contact arms 811, 812, 821, 822 of contact 81, 82 as will be explained further below.

Fig. 7 shows a top view in an x-z-plane of a photonic device 1 according to a further embodiment of the invention. The embodiment of the photonic device 1 shown in Fig. 5 is based on the embodiments shown in Fig. 2a to 5a and Fig. 6, and is similar to Fig. 4a to 5b.

The photonic device 1 shown in Fig. 7 comprises electric contacts disposed for electrically connecting the first optical component 5 and the at least one second optical component 6 to a power source (not shown). In preferred embodiments, the contacts are configured as metal routing lines. These contacts 81, 82 allow for a connection to the respective optical component 5, 6 integrated on the respective integration site in the cavity 4. In this embodiment, the contacts are provided with arms 811, 812, 821, 822 to contact respective anodes 53, 63 and cathodes 54, 64 of the first and second optical components 5, 6. This means, a first arm 811 of the first electric contact 81 is connected to the anode 53 of the first optical component 5, and a first arm 821 of the second electric contact 82 is connected to the cathode 54 of the first optical component. A second arm 812 of the first electric contact 81 is designed to be connected to the anode 63 of the second optical component 6 (not placed in Fig. 6), and a second arm 822 of the second electric contact 82 is designed to be connected to the cathode 64 of the second optical component 6.

In the present embodiment, the electric contacts 81, 82 or metal routing lines crossing the waveguide core 2. In this way, the optical signal can continue towards the first or second optical component. In this way, the electric contacts 81, 82 do not lead to any optical absorption in the path towards the optical components 5, 6.

Fig. 8 shows a top view in an x-z-plane of a photonic device 1 according to a further embodiment of the invention. This embodiment of the photonic device 1 is based on the embodiment of the photonic device 1 as described in the previous Fig. 7.

In comparison to Fig. 7, the second optical component 6 is now placed correctly on the bottom surface 4a of the cavity 4 in proximity to the first optical component 5 on the waveguide core 2. There is no misalignment of the second optical component 6 with respect to the second predetermined position 61. The first electrical contact 81 is connected by a second arm 812 of the first electric contact 81 to the anode 63 of the second optical component 6. The second electrical contact 82 is connected by a second arm 822 of the second electric contact 82 to the cathode 64 of the second optical component 6. Such a setup is possible for a detector as optical component 5, 6 as the common electric contacts 81 and 82 only add dark current to an electric signal. The drawback is a double of electric power consumption with respect to a single optical component 5, 6.

Fig. 9 shows a top view in an x-z-plane of a photonic device 1 according to a further embodiment of the invention. This embodiment of the photonic device 1 is based on the embodiment of the photonic device 1 as described in the previous Fig. 7.

In comparison to Fig. 8, the first electric contact 81 is connected only to the anode 53 of the first optical component 5. A third electric contact 83 having a first arm 831 is provided to be connected to the anode 63 of the second optical component 6. In this way, the falsely placed first optical component 5a can be electrically deactivated so that the electric power consumption is reduced. A stray capacitance is also reduced compared to the previous embodiment having a common anode electric contact 81. This is particularly valuable for low-speed optical components, like monitor diodes, or stable laser inputs that do not need to be driven > 1 GHz.

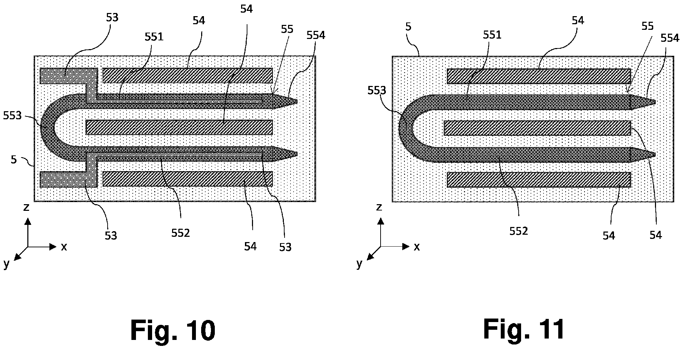

Fig. 10 shows a top view in an x-z-plane of an optical component to be integrated into a photonic device 1 according to a further embodiment of the invention.

Fig. 10 shows an electrically pumped amplifier or an electrically driven modulator, preferably based on a III-V material, as a possible example of a first optical component 5 or second optical component 6. The optical component 5 has a waveguide 55, which includes a first linear waveguide section 551 and a second linear waveguide section 552, which are connected by a U-shaped waveguide section 553 of the optical component 5. Two anodes 53 are provided adjacent to the U-shaped waveguide section 553 respectively extending on the first and second linear waveguide sections 551, 552. Furthermore, the waveguide 55 has tapered waveguide sections 554 as end portions of the first and second linear waveguide sections 551, 552. The optical component 5 also comprises three cathodes 54, which are arranged in proximity or adjacent to the linear waveguide sections 551, 552 and extending parallel to each other and the linear waveguide sections 551, 552. The anodes 53 and cathodes 54 are placed on a surface of the optical component 5 so that these are easily accessible from the outer edges of the photonic device 1.

Fig. 11 shows a top view in an x-z-plane of a further optical component to be integrated into a photonic device 1 according to a further embodiment of the invention.

Compared to the optical component 5 shown in Fig. 10, the optical component 5 of Fig. 11 is an electro-optically driven modulator such as a Thin-Film Lithium Niobate, TFLN, modulator. Although the arrangement of the cathodes 54 is similar as in the previous embodiment, the anode is arranged internally, so that a further conductive connection is required to connect such optical components 5 to the electric contacts 81 to 83 described before.

Fig. 12a-d show top views in an x-z-plane of a photonic device 1 in four different steps of fabrication according to a further embodiment of the invention.

In Fig. 12a, waveguide core 2 is shown which has a first linear waveguide section 21a and a second linear waveguide section 21b connected by a U-shaped waveguide section 23. The first and second waveguide sections 21a, 21b are connected to optical circuitry 90 of the photonic device 1. An optical mode thus propagates from the circuitry 90 through the first or second waveguide sections 21a, 21b to the U-shaped waveguide section 22 to return through the other of the first or second waveguide sections 21a, 21b back to the circuitry 90. A cavity 4 has been opened and first and second alignment markers 52, 62 are visible on the bottom surface 4a of the cavity 4, similar as described above with reference to Fig. 6 to 9.

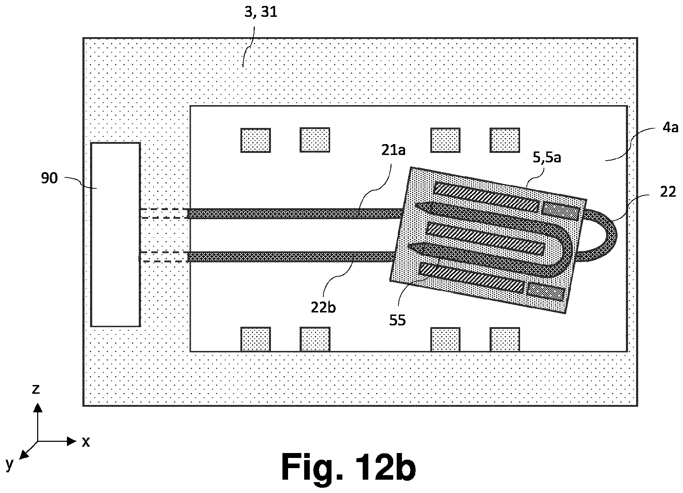

Fig. 12b shows the photonic device 1 after bonding the first optical component 5 onto the bottom surface 4a of the cavity 4. However, since the waveguide 55 on the first optical component is not parallel to the waveguide sections 21, 21b of the waveguide core 2, no effective evanescent coupling can occur. The first optical component 5 is thus classified as falsely placed first optical component 5a.

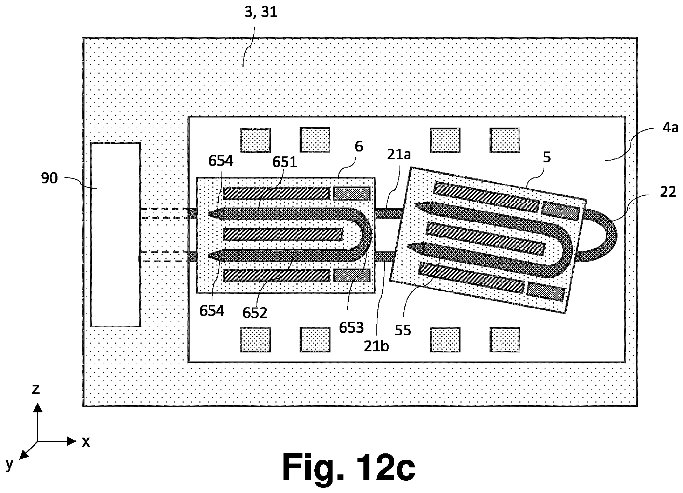

Fig. 12c shows the photonic device 1 after placing a second optical component 6 onto the bottom surface 4a correctly on the second predetermined position 61. An optical mode or optical signal thus propagates from the circuit 90 through the first or second waveguide sections 21a, 21b into the waveguide 65 of the second optical component 6. The coupling to the waveguide 65 is performed by the tapered waveguide sections 654. The optical mode is then modulated or amplified in the linear waveguide sections 651 and 652. The direction of propagation is then reversed by the U-shaped waveguide section 653. On the return path, the modulation or amplification is further performed in the other of the linear waveguide sections 651 and 652 and out coupling back into the waveguide core 2 is performed through the other tapered waveguide section 654 so that the optical mode returns through the other of the first or second waveguide sections 21a, 21b back to the circuitry 90.

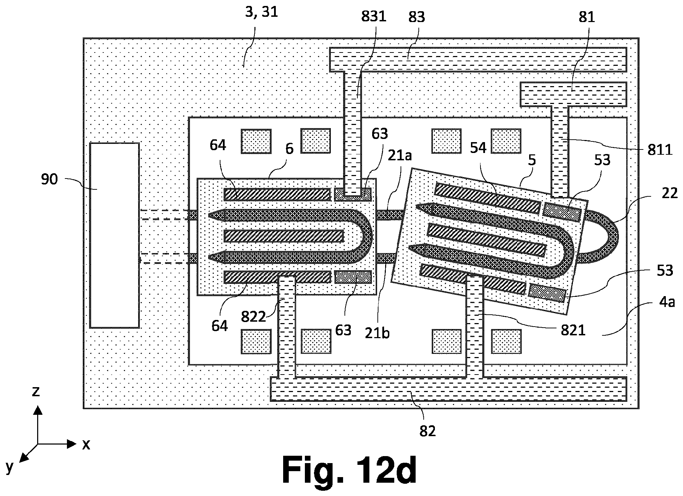

Fig. 12d shows the photonic device 1 after connecting the anode 53 of the first optical component 5 to the first electric contact 81, the anode 63 of the second optical components 6 to the third electric contact 83 and the cathodes 54, 64 of the first and second optical components 5, 6 to the second electric contact 82 similar as described with reference to Fig. 9.

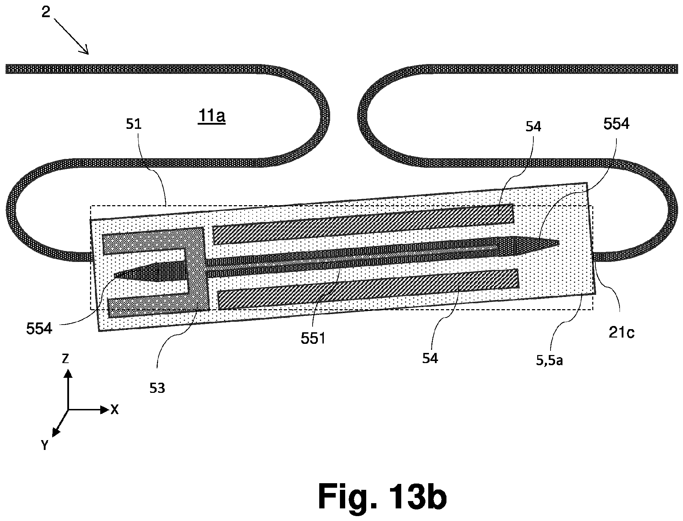

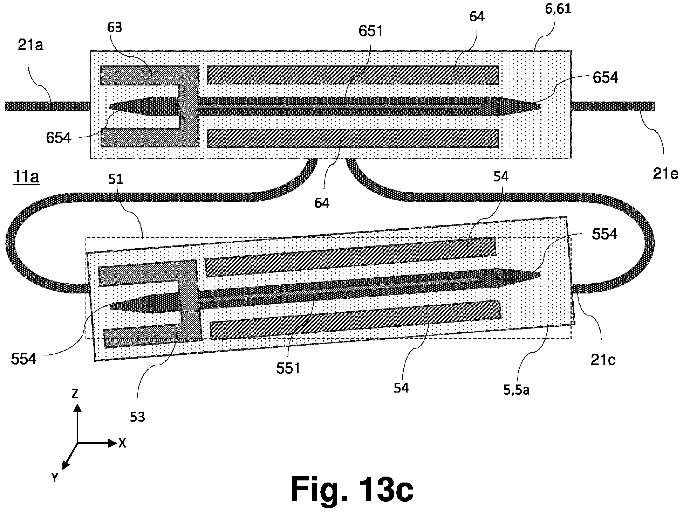

Fig. 13a shows a waveguide core 2 having meandered waveguide geometry included in the photonic device according to an embodiment of the invention. Fig. 13b shows a non-folded dual-port first optical component 5 bonded above the waveguide core 2 of Fig. 13a at a first predetermined position 51. Fig. 13c shows a non-folded dual-port second optical component 6 bonded on the waveguide core 2 of Fig. 13b at a second predetermined position 61.

As shown in Fig. 13a, the waveguide core 2 that can be applied for the non-folded optical components 5, 6 includes a first linear waveguide section 21a, directly connected to a right-turning first U-shaped waveguide section 22a, directly connected to a second linear waveguide section 21b, directly connected to a left-turning second U-shaped waveguide section 22b, directly connected to a third linear waveguide section 21c, directly connected to a left-turning third U-shaped waveguide section 22c, directly connected to a fourth linear waveguide section 21d, directly connected to a right-turning fourth U-shaped waveguide section 22d, directly connected to a fifth linear waveguide section 21e.

As shown in Fig. 13b, a non-folded dual-port first optical component 5 is bonded onto the upper surface 11a above the third waveguide section 21c. In analogy to Fig. 10, the optical component 5 comprises first and second electrodes 53, 54, a linear waveguide section 551 and two tapered waveguide sections 554 attached at the ends of the linear waveguide section 551 of the first optical component 5. As shown in Fig. 13b, the first optical component 5 is misplaced with respect to the first predetermined position 51, rendering the first optical component 5 to be a falsely placed first optical component 5a. By this placement, an optical mode cannot couple with sufficient efficiency from the waveguide core 2, namely by the third linear waveguide section 21c, into the linear section 551 of the first optical component 5.

As shown in Fig. 13c, a non-folded dual-port second optical component 6 is bonded onto the upper surface 11a correctly on the second predetermined position 61 such that an optical mode can efficiently couple from the first linear waveguide section 21a through the tapered waveguide sections 654 into the linear section 651 of the second optical component 6 and back through the other tapered waveguide sections 654 into the fifth linear waveguide section 21e, or vice versa.

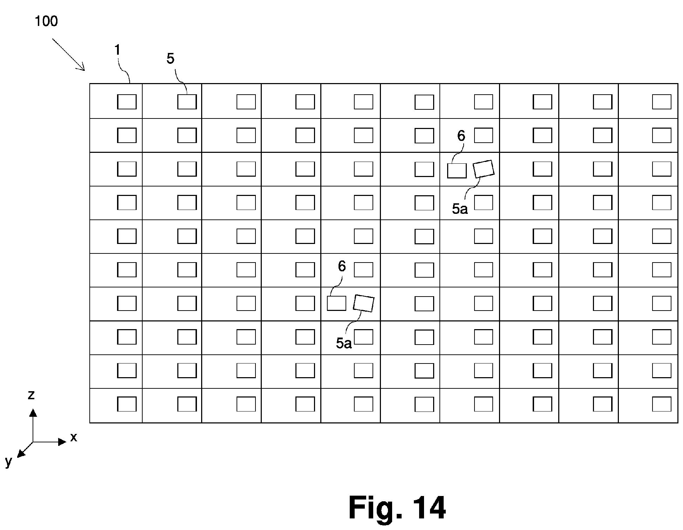

Fig. 14 shows a top view in an x-z-plane of an array of photonic device 1 according to an embodiment of the invention. The array 100 of photonic devices 1 is compatible with the above-described method for fabricating a photonic device 1 and the embodiments of the photonic device 1 shown in the above Fig. 2 to 12.

An array 100 of photonic devices 1 comprising a plurality of photonic devices 1. Each of the photonic devices 1 includes a photonic integrated platform including a waveguide structure 11 on a substrate 12, the waveguide structure 11 comprising a waveguide core 2 for guiding an optical mode, and an optical cladding 3, the optical cladding 3 including at least a top cladding layer 31 above the waveguide core 2. A cavity 4 may also be formed at least in the top cladding layer 31 locally. For simplicity, these features are not shown in Fig. 14.

The array 100 of first optical components 5 are bonded onto the upper surface 11a or on a plurality of bottom surfaces 4a of respective cavities 4 in parallel, meaning that all instances of optical components 5 in such an array 100 are printed in a single bonding step. This means that step S3 might be carried out in parallel or in a sequential manner or a combination thereof, depending on the available tool configuration for bonding, which includes printing. This is typically achieved using large microtransfer printing stamps or by using dedicated carriers for parallelized die-to-wafer bonding. Alternatively, the parallelization of printing of the first optical components 5 might be carried out in several bonding steps, depending on the amount of optical components 5 that are chosen to be printed in a single step. In some instances, 4x4 mini-arrays are printed at each single step, therefore an array 100 having one-hundred-sixty cavities 4, might be carried out in 10 steps with a 4x4 stamp. Alternatively, it might be carried out by using a single stamp carrying a 10x16 first optical component 5, forming potentially one-hundred-sixty photonic devices 1.

As previously mentioned in this disclosure, once the array 100 is formed by printing or bonding all the first optical components 5, an inspection or measuring step S4 is carried out to verify which optical components 5 are misplaced or misaligned, leading to a compromised functionality of the local photonic device 1. The position of each misaligned/ misplaced optical component may be stored in a computer memory in step S5 to be used during the subsequent corrective printing/ bonding step S6.

The corrective printing/ bonding step S6 is then executed to correct individual photonic devices 1. In this example, since a yield of 98% is expected from step S3, an array 100 with one-hundred-sixty first optical components is expected to yield approximately one-hundred-fifty-six good and functional photonic devices 1 and four bad photonic devices 1. Therefore, once the inspection step S4 measures all of the misalignment values for all the first optical components 5 in the array 100, the location of the four falsely photonic devices 1 is stored in a computer memory. Then, a single or individual printing / bonding step of optical components 6 is carried out at those locations according to the disclosure.

Therefore, in each photonic device 1 of the array 100, a first optical component 5 is bonded onto the upper surface 11a of a waveguide structure 11 or onto a bottom surface 4a of the cavity 4 (not shown in Fig. 14) at a first predetermined position 51 above the waveguide core 2. It can be seen that in two photonic devices 1, the first optical component 5 is a falsely placed first optical component 5a, similar as described above.

In these photonic devices 1, a second optical component 6 is bonded on the upper surface 11a of a waveguide structure 11 or onto the bottom surface 4a of at least one cavity 4 at a second predetermined position 61 above the waveguide core 2. The first optical component 5 and the second optical component 6 are of an identical type.

The photonic device 1 may be fabricated in parallel on separate substrates. In case of a common substrate 12, a subsequent fabrication step may be required to separate the photonic devices 1 from the array to provide separate photonic devices 1. Each photonic device 1 may have one of the cavities 4 of the plurality of cavities 4 comprising at least one first optical component 5. In other embodiments, separated photonic devices 1 may comprise more than one cavities 4 with first optical components 5.

It is understood that this invention is applicable to photonic device 1 or photonic integrated circuits having different types of optical components 5, 6, wherein redundant optical components of each type are placed upstream or downstream in the same opened cavities. Furthermore, during manufacturing, the photonic devices 1 may also be arranged in other forms than in the array form shown in Fig. 14.

In the detailed description above, various features have been combined in one or more examples in order to improve the rigorousness of the illustration. However, it should be clear in this case that the above description is of merely illustrative but in no way restrictive nature. It serves to cover all alternatives, modifications, and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present inventions is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiments. In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### LIST OF USED REFERENCE SIGNS

- 1: photonic device
- 2: waveguide core
- 3: cladding
- 4: cavity
- 4a: bottom surface of the cavity
- 4b: depth of the etched cavity
- 5: first optical component
- 5a: falsely placed optical component
- 6: second optical component
- 7: bonding layer
- 9: device circuitry
- 11: waveguide structure
- 11a: upper surface of the waveguide structure
- 12: substrate
- 21: first waveguide section of waveguide core
- 21a-e: first to fourth linear waveguide section of waveguide core
- 22: second waveguide section of waveguide core
- 23: u-shaped waveguide section of waveguide core
- 31: top cladding layer
- 32: lower cladding layer
- 33: surrounding cladding layer
- 51: first predetermined position
- 52: first alignment markers for first optical component
- 53: anode of first optical component
- 54: cathode of first optical component
- 55: waveguide on first optical component
- 61: second predetermined position
- 62: second alignment markers for second optical component
- 63: anode of second optical component
- 64: cathode of second optical component
- 55: waveguide on second optical component
- 81: first electric contact
- 82: second electric contact
- 83: third electric contact
- 551: first linear waveguide section of the first optical component
- 552: second linear waveguide section of the first optical component
- 553: U-shaped waveguide section of the first optical component
- 554: tapered waveguide section of the first optical component
- 651: first linear waveguide section of the second optical component
- 652: second linear waveguide section of the second optical component
- 653: U-shaped waveguide section of the second optical component
- 654: tapered waveguide section of the second optical component
- 811: first arm of first electric contact
- 812: second arm of first electric contact
- 821: first arm of second electric contact
- 822: second arm of second electric contact
- 831: first arm of third electric contact
- 90: optical circuit
- D: direction of propagation of optical mode
- α: misalignment angle

## Claims

1. Method for fabricating a photonic device (1), comprising providing (S1) a photonic integrated platform including a waveguide structure (11) on a substrate (12), the waveguide structure (11) having an upper surface (4a, 11a) and comprising a waveguide core (2) for guiding an optical mode, and an optical cladding (3) surrounding the waveguide core (2), the optical cladding (3) including a top cladding layer (31),
bonding (S3) a plurality of first optical components (5) onto the upper surface (4a, 11a) at a first predetermined position (51) above the waveguide core (2), measuring (S4) a position of each of the bonded first optical components (5) relative to the first predetermined position (51),
determining (S5) at least one falsely placed first optical component (5a) of the plurality of first optical components (5), and
bonding (S6) at least one second optical component (6) onto the upper surface (4a, 11a) in proximity to the at least one falsely placed first optical component (5a) at a second predetermined position (61) above the waveguide core (2), wherein the first optical component (5) and the second optical component (6) are of an identical type.

2. Method according to claim 1, wherein bonding of the first optical component (5) and bonding of the second optical component (6) is conducted via micro transfer printing, or, wherein bonding is carried out via glue-bonding or low-temperature bonding method.

3. Method according to claim 1 or 2, wherein measuring the position of each of the bonded first optical components (5) includes capturing an optical image of each of the plurality of first optical components (5).

4. Method according to any of the previous claims, further comprising forming alignment markers (52, 62) on two layers of the photonic device (1), wherein a first layer of the two layers is part of the the first or second optical component (5, 6), and wherein a second layer of the two layers is a layer formed prior to the bonding of the first optical component (5).

5. Method according to any of the previous claims, further comprising opening (S2) a plurality of cavities (4) by removing at least partly the top cladding layer (31) locally, wherein the cavity includes an exposed bottom surface (4a), wherein bonding (S3) the first optical components (5) includes bonding (S3) a first optical component (5) onto the exposed bottom surface (4a) of each of the cavities (4) at the first predetermined position (51) above the waveguide core (2),
wherein bonding (S6) of the at least one second optical component (5) comprises bonding (S6) the at least one second optical component (6) onto the bottom surface (4a) of the cavity (4), in which the at least one falsely placed first optical component (5a) is bonded.

6. Method according to claim 5, wherein opening of the plurality of cavities (4) includes etching the plurality of cavities (4) to a depth such that an optical mode emitted by the optical component optically couples to the waveguide core (2) by evanescent wave coupling.

7. Method according to any of the previous claims, further comprising forming a bonding layer (7) onto the upper surface (4a, 11a) before bonding the first optical component (5), wherein the first optical component (5) and the second optical component (6) are glue-bonded on the bonding layer (7), wherein the bonding layer (7) preferably includes an adhesive.

8. Method according to any of the previous claims, further comprising:
determining at least one falsely placed second optical component (6) of the at least one second optical components (6), and
bonding at least one third optical component onto the upper surface (4a, 11a) in proximity to the at least one falsely placed second optical component (6) at a third predetermined position above the waveguide core (2), wherein the first, second, and third optical components are of an identical type.

9. Photonic device (1) comprising:
a photonic integrated platform including a waveguide structure (11) on a substrate (12), the waveguide structure (11) having an upper surface (4a, 11a) and comprising a waveguide core (2) for guiding an optical mode, and an optical cladding (3), the optical cladding (3) including at least a top cladding layer (31) above the waveguide core (2),
a first optical component (5) bonded onto the upper surface (4a, 11a) at a first predetermined position (51) above the waveguide core (2), wherein the first optical component (5) is a falsely placed first optical component (5a) having a misalignment with respect to the predetermined first position, and
a second optical component (6) placed onto the upper surface (4a, 11a) at a second predetermined position (61) above the waveguide core (2),
wherein the first optical component (5) and the second optical component (6) are of an identical type.

10. Photonic device (1) according to claim 9, wherein a cavity (4) is formed at least in the top cladding layer (31) locally and first or second optical components (5, 6) are bonded onto a bottom surface (4a) of the cavity (4) at respective first and second predetermined positions (51, 62) above the waveguide core (2).

11. Photonic device (1) according to claim 9 or 10, wherein the first and second optical components (5, 6) are light emitters, wherein the second predetermined position (61) is located at a position downstream the first predetermined position (51) in an intended propagation direction (D) of the optical mode in the waveguide core (2).

12. Photonic device (1) according to claim 9 or 10, wherein the first and second optical components (5, 6) are photodetectors having a detector surface, wherein the second predetermined position (61) is located at a position upstream the first predetermined position (51), wherein an optical mode propagating through the waveguide core (2) moves towards the detector surface, wherein the photodetector preferably is evanescently coupled to a termination of the waveguide core (2).

13. Photonic device (1) according to claim 9 or 10, wherein the first and second optical components (5, 6) are dual-port optical components, wherein the dual-port optical components include a reverse portion comprising a U-shaped waveguide portion (23) in which an intended propagation direction (D) of the optical mode in the waveguide core (2) is reversed.

14. Photonic device (1) according to claim 9 or 10, wherein the the first and second optical components (5, 6) are non-folded dual-port optical components, wherein waveguide core (2) of the waveguide structure (11) has a meandered waveguide geometry.

15. Photonic device (1) according to any of claims 9 to 14, wherein the waveguide structure (11) further comprises a bridge layer arranged between the waveguide core (2) and the upper surface (4a, 11a), wherein a refractive index of the bridge layer allows to efficiently couple light between the bonded optical component and the waveguide core (2).
